# EUROPEAN PATENT SPECIFICATION

(11) **EP 2 837 897 B1**
(45) Date of publication and mention of the grant of the patent: **01.03.2017**
(21) Application number: 13775667.2
(22) Date of filing: 02.04.2013
(51) Int. Cl.: F24F 7/00, B01D 46/00, B01D 46/24, F24F 13/20, F24F 13/28, F24F 3/16

(54) **AIR-CLEANING DEVICE**
LUFTREINIGUNGSVORRICHTUNG
DISPOSITIF D'ÉPURATION D'AIR

(30) Priority: 09.04.2012 JP 2012088816
(43) Date of publication of application: 18.02.2015
(73) Proprietor: Balmuda Inc., Kodaira-shi, Tokyo 187-0003 (JP)
(72) Inventor: TERAO Gen, Kodaira-shi Tokyo 187-0003 (JP)
(74) Representative: Delorme, Nicolas
(86) International application number: PCT/JP2013/060121
(87) International publication number: WO 2013/153995

(56) References cited:
- WO-A1-2011/014123
- DE-A1-102009 053 505
- JP-A- H03 128 021
- JP-A- 2006 271 614
- JP-A- 2006 292 251
- JP-A- 2010 207 658
- JP-U- H0 621 720
- JP-U- S60 123 521
- US-A1- 2003 150 326

## Description

### [TECHNICAL FIELD]

The present invention relates to an air-cleaning device which cleans air by passing air taken in from an inlet through a filter to clean the air and discharge the cleaned air through a discharge port.

### [BACKGROUND ART]

Various kinds of air-cleaning devices have been conventionally sold. The main purpose of these air-cleaning devices is to remove house dust, mold, pollen, bacteria, viruses, or the like in the air inside a room. Although air-cleaning devices which use ultraviolet rays, photocatalysts, and negative ions are known, air-cleaning devices which remove particles or the like by means of a filter are mainly used.

In other words, because it is necessary to ensure removal of particles in order to achieve an air cleaning function, air filtering by means of a filter appears to be required.

### [RELATED ART DOCUMENT]

### [Patent Document]

Patent Document 1: JP 2000-18657 A
Patent Document 2: JP 2006-292251 A

It is also known from document WO2011014123 an air filter according to the preamble of claim 1 having an inlet for air and an outlet for air and comprising a body having a central channel.

### [DISCLOSURE OF THE INVENTION]

### [Problems to be Solved by the Invention]

For filters, various materials are known and improvements have been achieved. However, because air-cleaning devices have relatively simple functions, with a fan provided inside the main body, to take in air from an inlet and discharge cleaned air which has passed through a filter, the improvements are focused on downsizing, noise reduction, or the like, while not many suggestions have been made regarding basic improvements to these functions.

### [Means for Solving the Problems]

The present invention is characterized by an air cleaning device according to the subject-matter of claim 1.

It is further preferable that a drive controller that controls driving of the filter fan and the exhaust fan independently is provided.

It is further preferable that the filter fan is a centrifuge type fan and the exhaust fan is an axial flow type fan.

It is further preferable that the communication means is provided with the main body casing and serves as a vent for communicating between the air passage and outside the device.

It is further preferable that the vent is openable and closable.

### [Advantage of the Invention]

According to the present invention, because communication means is provided, it becomes possible to directly take in external air in addition to the air having passed through a filter, increasing the total amount of air flow, and as a result air circulation inside a room is also achieved.

### [BRIEF DESCRIPTION OF THE DRAWINGS]

FIG. 1 is a perspective diagram showing an overall structure of a first embodiment.
FIG. 2 is a perspective diagram showing a structure without a main body casing according to the first embodiment.
FIG. 3 is a perspective diagram showing the main body casing according to the first embodiment.

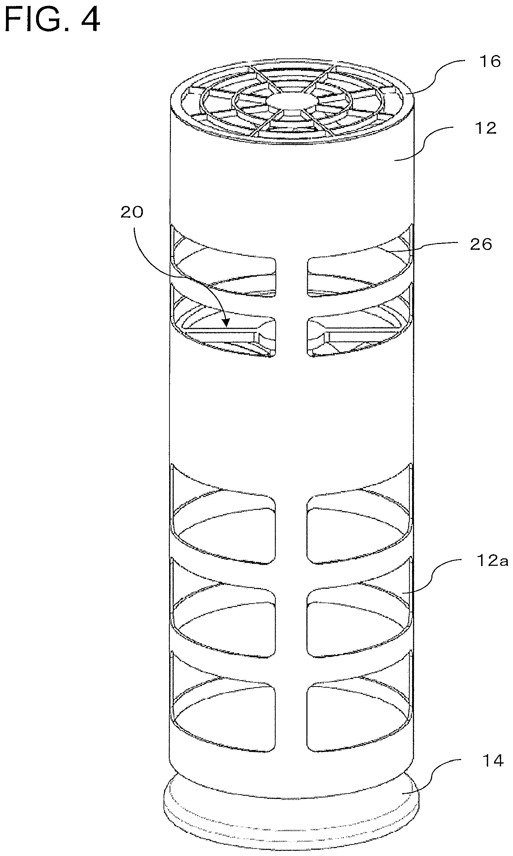

FIG. 4 is a perspective diagram showing a structure without a filter according to the first embodiment.

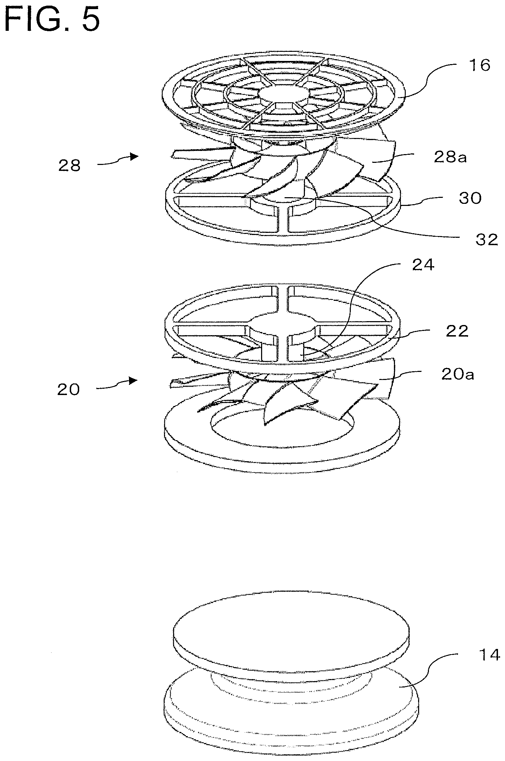

FIG. 5 is a perspective diagram showing a structure without the main body casing and the filter according to the first embodiment.
FIG. 6 is a perspective diagram showing an overall structure of a second embodiment.
FIG. 7 is a perspective diagram showing a structure without a main body casing according to the second embodiment.
FIG. 8 is a perspective diagram showing a structure without a filter according to the second embodiment.
FIG. 9 is a perspective diagram showing a structure without the main body casing and the filter according to the second embodiment.
FIG. 10 is a diagram showing a structure with an example of shutters.
FIG. 11 is a diagram showing a structure of the main body casing where the shutters are formed.
FIG. 12 is a diagram showing an open state and closed state of the shutter.
FIG. 13 is a diagram showing another example of a shutter.
FIG. 14 is a diagram showing a structure of another example of a shutter.
FIG. 15 is a diagram showing a structure of the main body casing where the shutters are formed.
FIG. 16 is a diagram showing yet another example of a structure of a shutter.
FIG. 17 is a diagram showing yet another example of a structure of a shutter.
FIG. 18 is an example of a structure with a movable fan.
Fig. 19 is a drawing showing an air flow in which external air is passed through a filter and external air is taken in through vents.
FIG. 20 is a diagram showing an air flow in which external air is passed through a filter with closed vents.

### [BEST MODE FOR CARRYING OUT THE INVENTION]

Embodiments of the present invention are described below with reference to drawings.

### <First Embodiment>

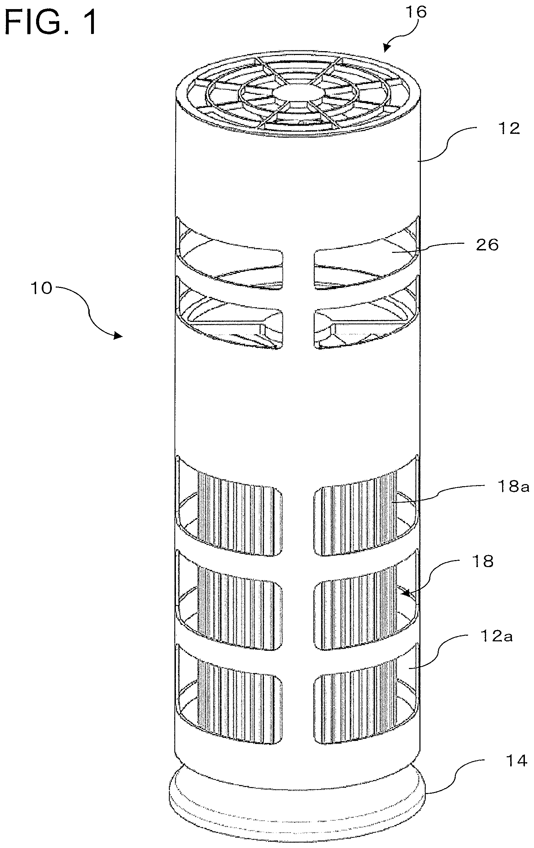

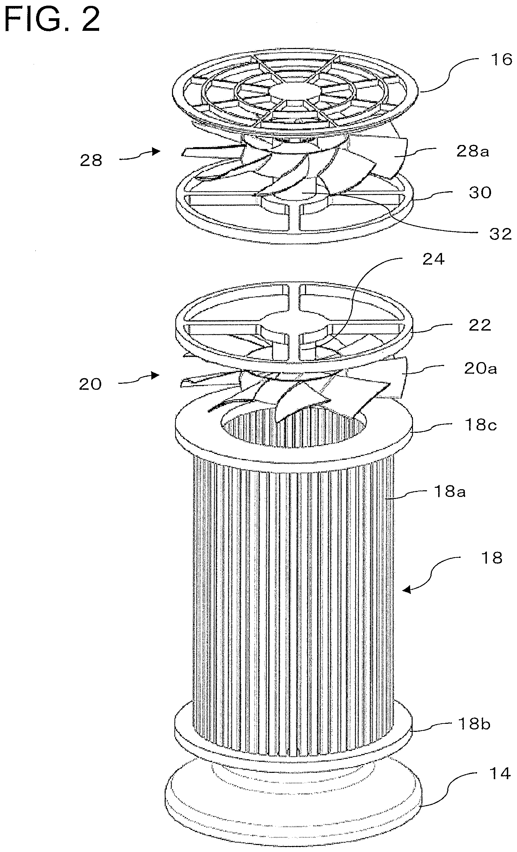

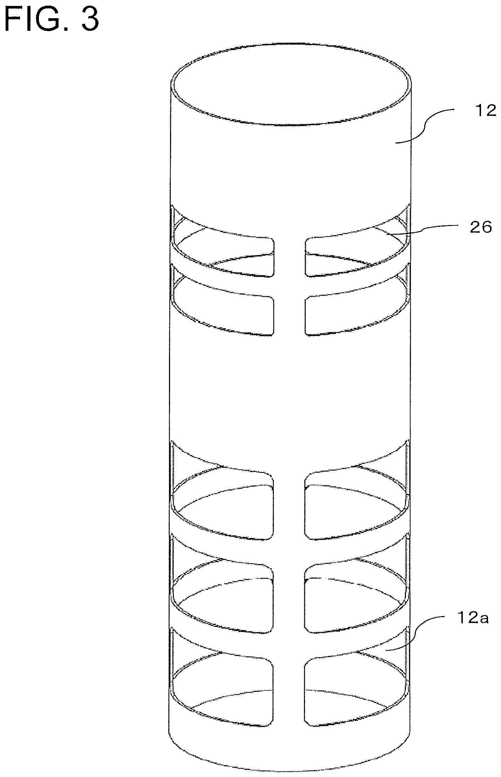

FIG. 1 is a perspective diagram showing an overall structure of an air-cleaning device 10 according to a first embodiment; FIG. 2 is a perspective diagram without a main body casing; and FIG. 3 is a perspective diagram showing the main body casing. It should be noted here that in each drawing, a filter such as a mesh filter to capture relatively large particles such as dust to be mounted on an opening of the main body casing is omitted.

The main body casing 12 has a cylindrical shape and the bottom end is mounted on a base 14, while the top end has a lid 16 mounted thereon.

The base 14 has a trumpet-like shape which broadens downwardly such that the bottom end can be securely placed on a floor or the like. It should be noted that the base 14 can have any shape as long as the base 14 can support the main body.

A cylindrical filter 18 is mounted on the top end of the base 14. The filter 18 includes a cylindrical filter portion 18a through which air is passed and filtered, a lower flange 18b, and an upper flange 18c. The lower flange 18b is mounted on the top of the base 14. The lower flange 18b may support the bottom end of the main body casing 12. Alternatively, the base 14 may have a disk on top thereof and support, by means of the disk, the lower flange 18b of the filter 18 and the lower end portion of the main body casing 12.

It should be noted that although the main body casing 12 and the filter 18 have a circular cylindrical shape in the present embodiment, the main body casing 12 and the filter 18 may have another shape such as a polygonal cylindrical shape.

Both of the lower flange 18b and the upper flange 18c of the filter have a donut-like shape. The filter portion 18a is formed from, for example, paper and nonwoven fabric such that the filter portion 18a captures particles on the external surface and obtains cleaned air on the internal side. In order to enlarge a surface area, the filter portion 18a is folded to have repeated ridges and grooves in the circumferential direction. The bottom end and the top end of the filter portion 18a are respectively air-tightly sealed with the lower flange 18b and the upper flange 18c. It should be noted that although the opening of the lower flange 18b is closed by the disk of the base 14, a disk may be applied in place of the lower flange 18b to close the lower end of the internal space of the filter 18.

The circumference of the upper flange 18c of the filter 18 is air-tightly sealed with an internal surface of the main body casing 12. The circumference of the lower flange 18b or a top disk portion of the base 14 is also air-tightly sealed with the internal surface of the main body casing 12. Therefore, the internal space of the filter portion 18a communicates with space outside the device only through a central opening of the upper flange 18c, and the internal space is partitioned by the outer space of the filter portion 18a by the filter portion 18a.

The main body casing 12 placed outside the filter portion 18a is provided with two or more opening portions 12a. The external space of the filter portion 18a communicates with the external space.

A filter fan 20 is provided above the upper flange 18c within the main body casing 12. A stay 22 including a circumferential ring and a center disk which are connected to each other via two or more radial connecting bars is provided above the filter fan 20. The stay 22 is fixed to the main body casing 12 with the circumferential ring fixed to the internal surface of the main body casing 12. A motor 24 is mounted downwardly on the center disk of the stay 22. Blades 20a of the filter fan 20 are mounted on a rotation axis which extends downwardly from the motor 24. Therefore, the blades 20a rotate along with the rotation of the motor 24, driving the filter fan 20.

The blades 20a are two or more plate-shaped blades which extend radially. The filter fan 20 is an axial flow type fan.

Further, because the filter fan 20 is located where the main body casing 12 has no openings such that the filter fan 20 is placed inside a cylinder of the main body casing 12, it is possible to blow the air inside the main body casing 12 upward or downward by driving the filter fan 20.

The main body casing 12 has two or more openings above the filter fan 20, that is, above the stay 22 such that the openings serve as vents 26 which enable communication with air outside the device.

An exhaust fan 28 is provided within the main body casing 12 above the vents 26. Particularly, a stay 30 which has a similar structure to the stay 22 is provided above the vents 26. A motor 32 is mounted on a center disk of the stay 30. Blades 28a of the exhaust fan 28 are mounted on a rotation axis which extends upwardly from the motor 32. Therefore, the blades 28a rotate along with the rotation of the motor 32, driving the exhaust fan 28. The exhaust fan 28 is also an axial flow type fan.

Because the main body casing 12 around the exhaust fan 28 is closed, the air inside the main body casing 12 is blown upward or downward by the exhaust fan 28.

The main body casing 12 has a top end which is opened and on which a lid 16 is mounted. The lid 16 is formed from a circumferential ring, a center disk, two or more intermediate rings, and radial bars connecting these components. The lid 16 serves as a guard to prevent users from inserting a hand inside the main body casing 12, with negligible disturbance to the flow of air.

As described above, in the present embodiment, the filter fan 20 is provided inside the main body casing 12 when the filter fan 20 communicates with the internal space of the filter 18. Accordingly, by discharging air in the internal space of the filter 18 by the filter fan 20, external air is passed and filtered through the filter portion 18a such that the filtered and cleaned air is blown upward of the filter fan 20.

Further, by discharging air inside the main body casing 12 upward via the lid 16, the air taken in via the vents 26 is blown upward in addition to the air blown by the filter fan 20.

### "Cleaning and Circulating Mode"

When the filter fan 20 and the exhaust fan 28 blow air upward with the same air blowing capacity, as the air blowing capacity of the filter fan 20 is decreased due to a pressure loss of the filter portion 18a, the exhaust fan 28 is caused to blow air upward while taking external air through the vents 26. Further, even when the air blowing capacity of the exhaust fan 28 is set higher than the filter fan 20, external air is taken from the vents 26 and blown upward.

As it is thereby possible to blow not only the cleaned air passed through the filter portion 18a but also the air taken in through the vents 26, the amount of air blown upward of the air-cleaning device can be increased. Accordingly, itispossible to sufficiently circulate air in the room in addition to cleaning the room air with the filter 18. Therefore, by circulating the air, the room air flows such that not only the air around the opening portions 12a but also the air in the whole room can be cleaned by the filter 18.

When the air blow direction of the filter fan 20 is set upward as described above while the air blow direction of the exhaust fan 28 is set downward, the air blown from the filter fan 20 and the air blown from the exhaust fan 28 are discharged together from the vents 26. In this way, as it becomes possible to take in air from the upper and lower portions of the device and discharge the air in substantially the horizontal direction, air cleaning by the filter 18 and room air circulation can be performed.

By reversing the air blowing direction of the exhaust fan 28 as required, it becomes possible to circulate the room air in different directions, and to move and clean the entire room air.

Further, because the main body casing 12 has a cylindrical shape, the air blowing capacity of the rotating fans can be sufficiently utilized and the installation space can be minimized.

### "Air Circulation Mode (Second Mode)"

By driving the exhaust fan 28 while the filter fan 20 is at a halt, air circulation alone is performed. By reversing the air blowing direction, two modes can be switched between one mode in which air is taken through the vents 26 and discharged upward, and the other mode in which air is taken from the top and discharged in a horizontal direction through the vents 26.

### "Cleaning Mode (First Mode)"

By driving the filter fan 20 while the exhaust fan 28 is at a halt, the air which has passed through the filter 18 is discharged upward. In this case, although some air may also be discharged from the vents 26, most of the air is discharged upward. Although the room air is circulated by the air discharged upward, because the amount of air blown is less than the case with the exhaust fan 28 being driven, the air circulation function is relatively less effective. It should be noted that it is also possible to reduce the amount of air blown by the exhaust fan 28 rather than stopping the exhaust fan 28.

### <Second Embodiment>

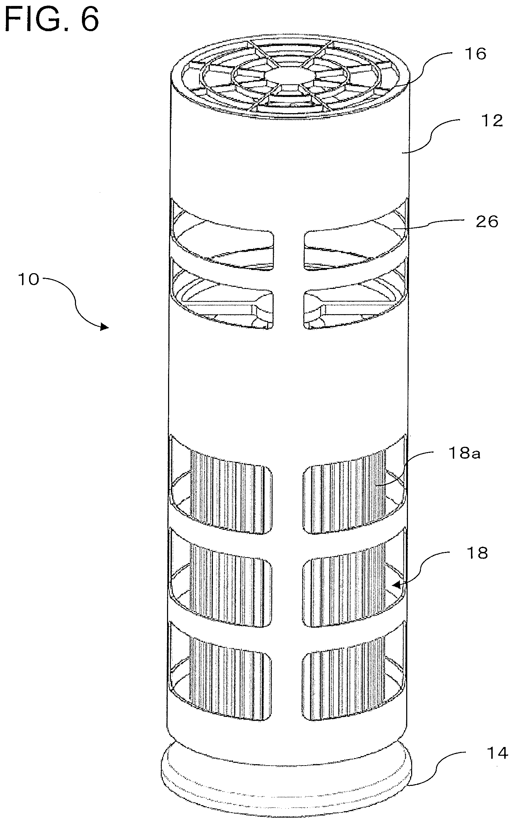

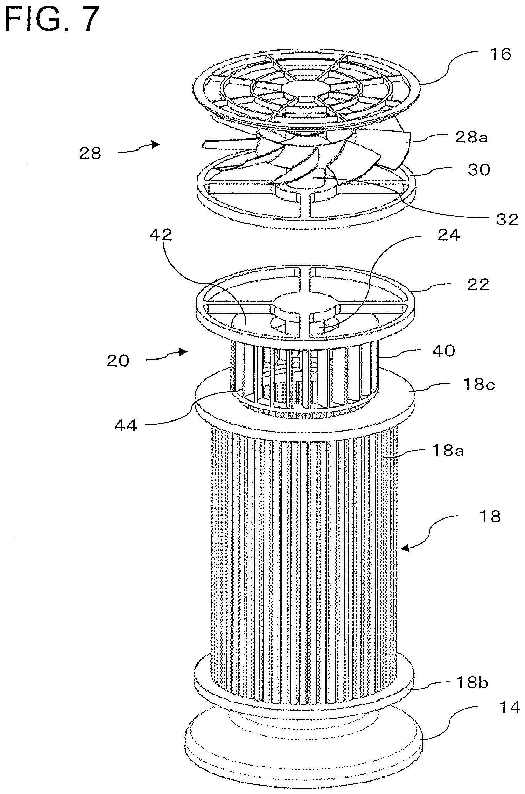

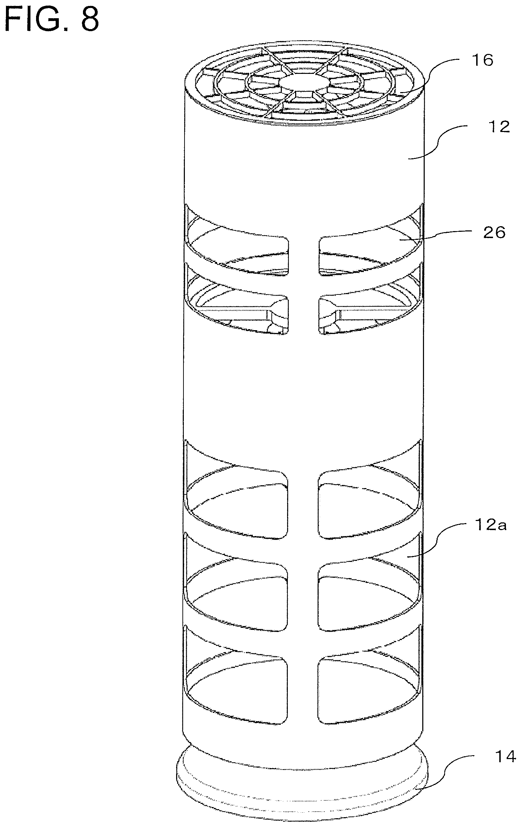

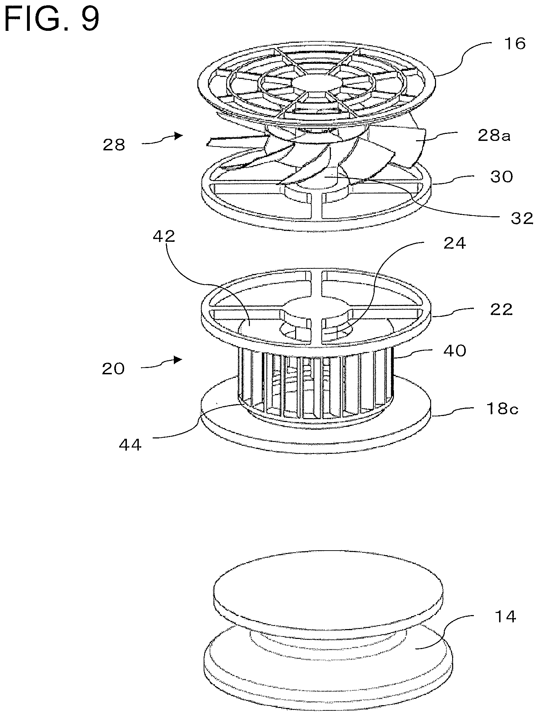

The second embodiment is shown in FIGs. 6 to 9. In this embodiment, a Sirocco fan which is a centrifuge type fan is used as the filter fan 20. Specifically, in the filter fan 20, many plate-shaped blades 40 which are shifted in one direction from the radial direction when seen from the top are arranged in a cylindrical shape. The tops of the cylindrically arranged blades 40 are fixed to and closed by an upper disk 42, while the bottoms of the cylindrically arranged blades 40 are connected to a donut-shaped ring 44, which is rotatably supported by an inner circumference of the upper flange 18c of the filter 18.

The stay 22 is positioned above the filter fan 20. A motor 24 is mounted below the stay 22 at the center. The upper disk 42 of the filter fan 20 has a concave portion which extends downward at the center. The motor 24 is partially received in the concave portion. An output shaft of the motor 24 is fixed at the center of the upper disk 42.

As the diameter of the upper disk 42 is arranged to be shorter than the inner diameter of the main body casing 12, the surrounding space of the cylindrically arranged blades 40 communicates upward inside the main body casing 12, while the bottom end of the cylindrically-arranged blades are closed by the upper flange 18c. Further, the inner space of the filter portion 18a and the inner space of the cylindrically arranged blades 40 communicate with each other through the central opening of the ring 44.

Accordingly, by rotating the blades 40 in a predetermined direction, air in the inner space of the blades 40 is blown towards the surrounding space and blown upward inside the main body casing 12. Therefore, the air cleaned by the filter 18 is blown upward inside the main body casing 12 by the filter fan 20.

It should be noted that with a centrifuge type fan such as a sirocco fan, it is possible to enlarge difference in pressure between the intake side and the discharge side in comparison with an axial flow type fan. Therefore, by using a centrifuge type fan as the filter fan 20 and an axial flow type fan as the exhaust fan 28, it becomes possible to perform an efficient filtering process in consideration of the pressure loss due to the filter 18, enabling efficient air blow through the vents 26 by the exhaust fan 28.

As described above, by using two fans with different characteristics, efficient air cleaning and air circulation become possible as a whole.

### <Shutter>

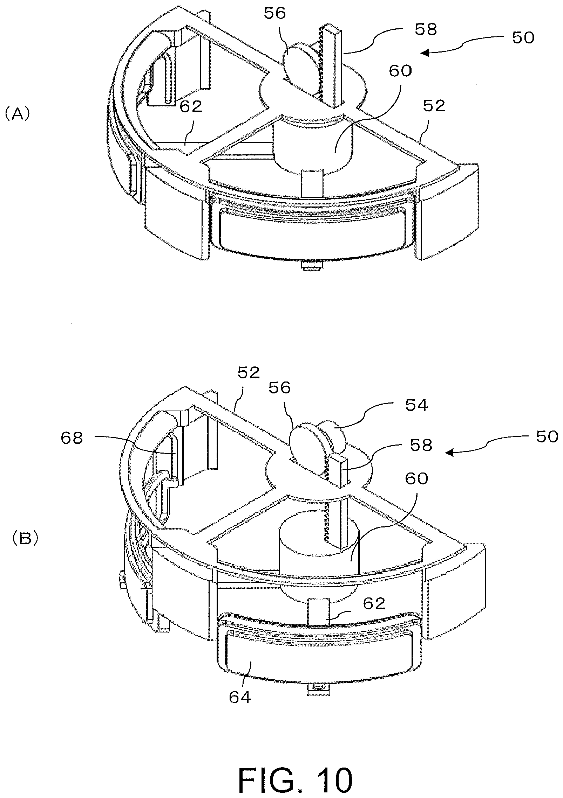

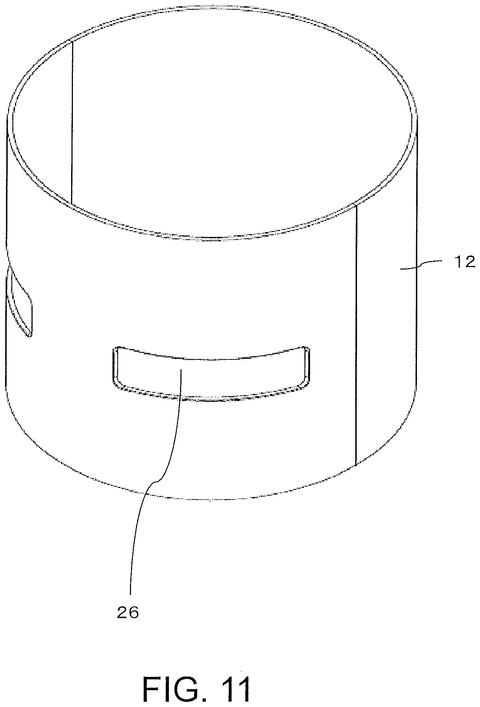

FIGs. 10 to 12 show an example of a structure in which a shutter 50 is provided with each of the vents 26. In this example, the shutters 50 which are movable upward, downward, and in a radial direction are provided where the vents 26 of the main body casing 12 shown in FIG. 11 are provided. The shutters 50 open and close the vents 26.

A stay 52 is mounted inside the main body casing 12. A motor 54 is mounted at the center of the stay 52. The motor 54 rotates a pinion gear 56. A rack 58 engages with the pinion gear 56. The rack 58 moves upward or downward along with a rotation of the pinion gear 56 in the forward or reverse direction.

The bottom end of the rack 58 is connected to a cylindrically shaped central member 60. A cover member 64 having a shape corresponding to the shape of the vent 26 is mounted on a connection member 62 which extends in a radial direction from the central member 60.

It should be noted here that the cover member 64 is mounted on the connection member 62 such that the cover member 64 is movable in a radial direction. Pins 66 which are mounted on both sides of the cover member 64 engage with guide grooves 68 which are provided on both sides of the vents 26 of the main body casing 12 in the circumferential direction. The guide grooves 68 are formed such that the pins 66 move toward the inner side of the main body casing 12 along with the downward movement of the pins 66. Accordingly, the cover member 64 moves not only upward and downward but also in a radial direction along with the upward and downward movement of the connection member 62.

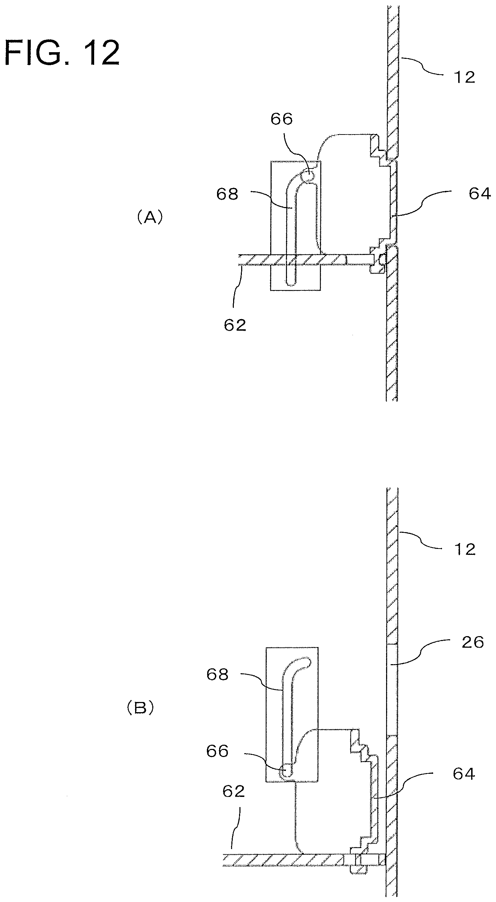

In other words, as shown in FIG. 12, when the cover member 64 is positioned at the top end, the cover member 64 is positioned at the outer side in a radius direction such that the cover member 64 is pressed into the vent 26 to close the vent 26. On the other hand, when the cover member 64 is moved downward, the cover member 64 is guided by the guide grooves 68 to pull inwards away from the vent 26 such that the cover member 64 is enclosed on the inner side of the main body casing 12.

In this way, the cover member 64 can close or open the vent 26 by forward and reverse rotation of the motor 54.

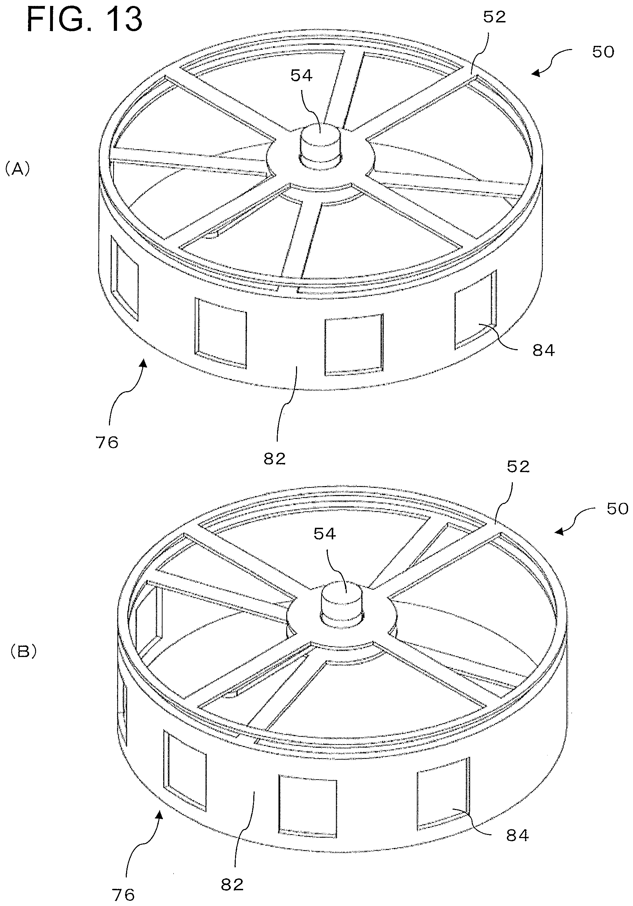

FIGs. 13 to 15 show another example of the structure of the shutter 50. In this example, a shutter 50 which moves in circumferential directions is provided inside a portion of the main body casing 12 where the vents 26 are provided, such that the shutter 50 opens or closes the vents 26.

A stay 52 is provided inside the main body casing 12. A rotatable disk 70 which is rotated by the motor 54 in a horizontal plane is provided at the center of the stay 52. A pin (not shown) is eccentrically attached on the bottom surface of the rotatable disk 70.

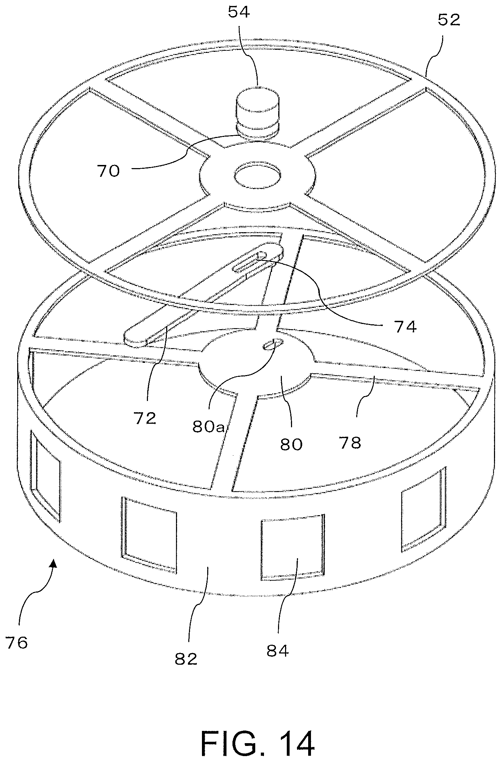

As shown in FIG. 14, the pin (not shown) is formed to protrude at an eccentric position on the bottom surface of the rotatable disk 70. The pin of the rotatable disk 70 rotates due to the rotation of the motor 54.

A guide bar 72 is provided beneath the rotatable disk 70. The pin of the rotatable disk 70 engages with an elongated hole 74 of the guide bar 72. Further, a rotatable cylinder 76 is provided beneath the guide bar 72. Two or more connection members 78 directed towards the center, and a center portion 80 which is connected to the inner side of the connection members 78, are formed on the top end of the rotatable cylinder 76. Two or more windows 84 are provided on a side cylindrical portion 82 of the rotatable cylinder 76.

Each window 84 has a shape corresponding to the vent 26 of the main body casing 12. The vents 26 are opened and closed by the rotation of the rotatable cylinder 76.

A pin is formed on the bottom surface at one end of the guide bar 72. The pin engages with a hole 80a eccentrically disposed on the center portion 80. Accordingly, the pin of the rotatable disk 70 moves within the elongated hole 74. The rotation of the guide bar 72 caused by this movement is transformed to a reciprocating rotation movement of the rotatable cylinder 76 (refer to FIGs. 13A and B). Opening and closing of the vents 26 with the rotation of the motor 54 can be enabled by arranging the reciprocating rotation movement amount of the rotatable cylinder 76 to correspond to the opening and closing of the vents 26.

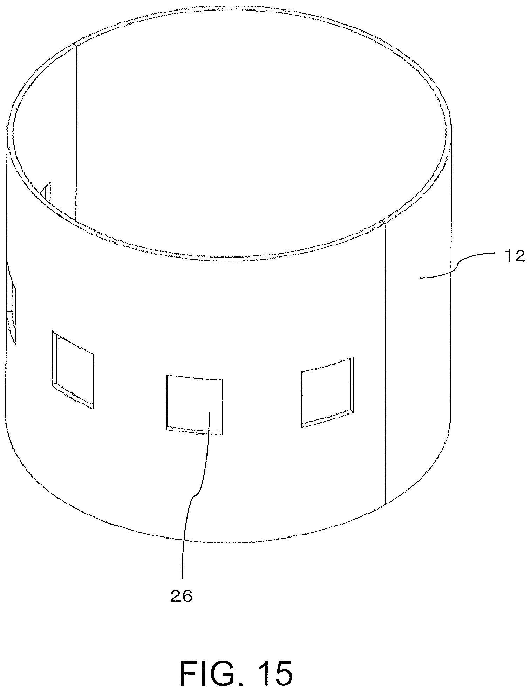

Further, as shown in FIG. 15, vents 26 may be provided on the half surface of the main body casing 12 in the circumferential direction. In this way, the direction to take in air through the vents 26 can be limited. It is also possible to provide the vents 26 on the entire surface, and correspondingly provide the windows 84 on the entire surface of the rotatable cylinder 76.

It should be noted here that the shutter 50 may be arranged such that users can switch modes with their hands.

By opening and closing the vents 26 by the shutter 50, the main function of the exhaust fan 28 canbe switchedbetween filtering by the filter 18 and air circulation.

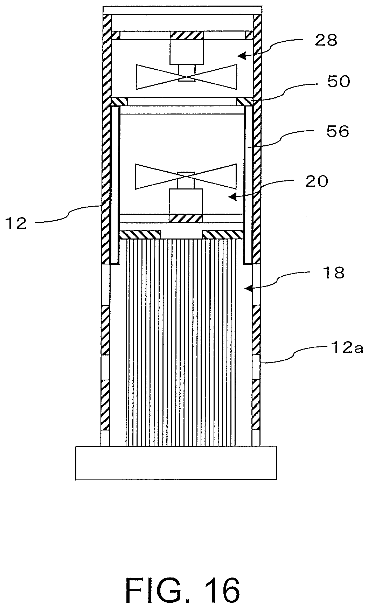

Further, as shown in FIG. 16, it is also possible to provide one or more bypasses 56, which communicate between the external space of the filter 18 and the space enclosing the exhaust fan 28 without providing the vents 26, and a shutter 50 which opens and closes the bypass 56. In this example, the bypass 56 has a pipe shape which extends from the external space of the filter 18 to the upper space of the filter fan 20 . A shutter 50 for opening and closing the top opening of the bypass 56 may be provided. The shutter 50 has a ring shape and includes openings corresponding in number to the number of bypasses 56, such that the shutter 50 moves in the circumferential direction and thereby opens and closes the top end openings of the bypasses 56.

In this way, the bypass 56 can be opened and closed and thereby the air blown by the exhaust fan 28 can be switched between from the internal space and from the external space of the filter 18 (outside the device).

It should be noted that the bypass 56 may extend within the internal space of the filter portion 18a and communicates with the external space via the filter portion 18a.

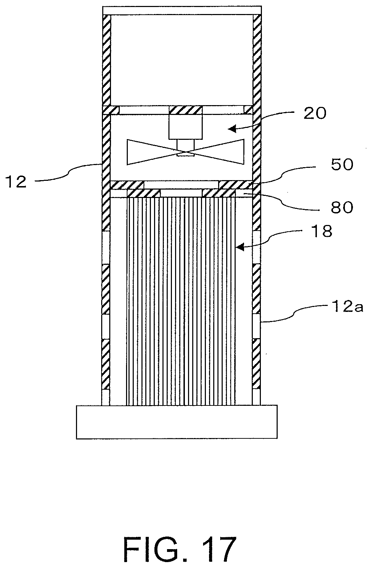

FIG. 17 shows a further example of a variation. In this example, only one filter (filter fan 20) is provided, unlike the example in FIG. 16. An opening 80 which communicates with the external space of the filter portion 18a is provided around the upper flange 18c of the filter 18. A shutter 50 to open and close the opening 80 is provided. In this way, the opening 80 can be opened and closed, thereby switching the air blow of the filter fan 20 between from the internal space of the filter 18 and from the external space (outside the device). It should be noted that the passage with which the opening 80 communicates may be arranged to extend in the internal space of the filter portion 18a and communicate with the external space via the filter portion 18a.

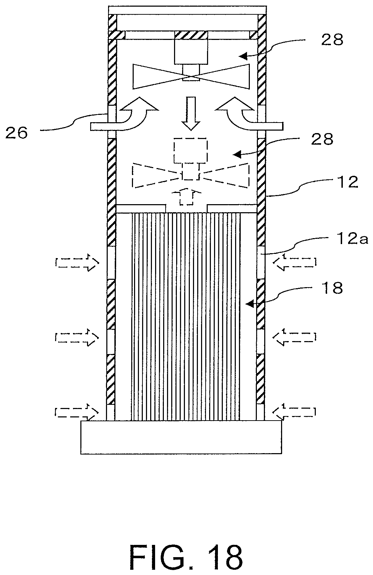

FIG. 18 shows yet another example. In the example, the exhaust fan 28 moves up and down. Specifically, the exhaust fan 28 is arranged to be movable to two positions, above and below the vents 26. In this way, when the exhaust fan 28 is positioned below the vents 26, the exhaust fan 28 takes in air from the internal space of the filter 18 and blows the air upward, while when the exhaust fan 28 is positioned above the vents 26, the exhaust fan 28 takes in the external air through the vents 26 and blows the air upward.

It should be noted that although the filter fan 20 is omitted in this example, it is also possible to provide the filter fan 20 such that the filter fan 20 takes in air from the internal space of the filter portion 18a, similarly to the above described embodiments.

### <Flow of Air Blow>

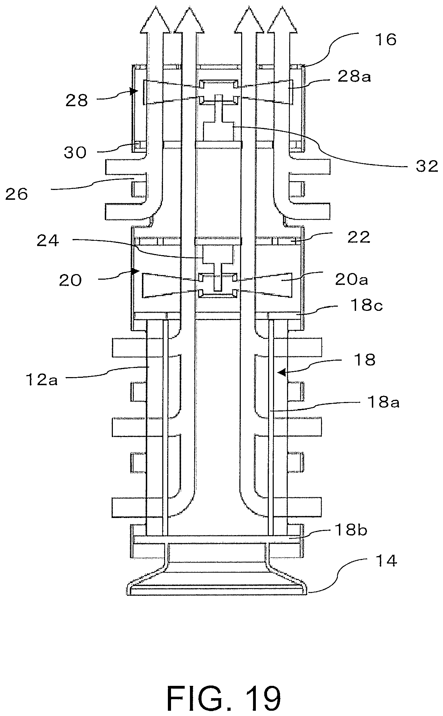

FIG. 19 shows air flows in a mode in which external air is taken through the vents 26. By blowing the air in the internal space of the filter 18 upward by the filter fan 20, external air passes through the filter 18 via the opening portions 12a, and thereby the cleaned air is blown upward. Further, as external air is taken in by the exhaust fan 28 through the vents, the air including the external air is blown upward.

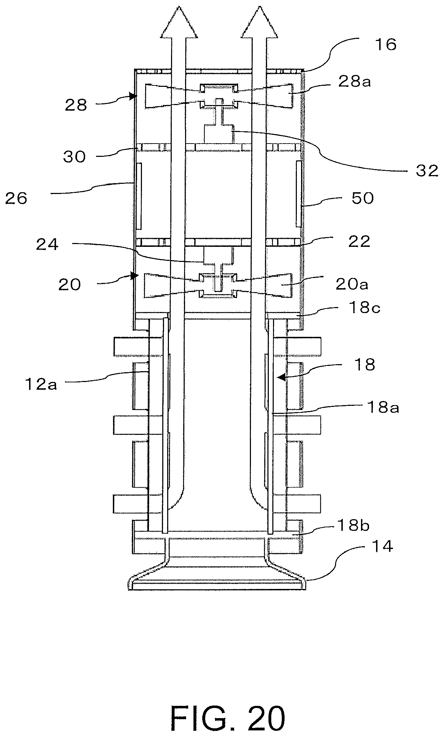

FIG. 20 shows air flows when the vents 26 are closed with the shutter 50. As shown, cleaned air which has passed through the filter 18 is blown upward by the filter fan 20 and the exhaust fan 28. Because the two fans are used to blow the air, the amount of cleaned air passing through the filter 18 can be increased.

### <Others>

In the above examples, the shutter 50 is structured to open and close the vents provided with the main body casing 12 from inside. However, it is also possible to configure the shutter 50 to open and close the vents 26 from outside the main body casing 12. Similarly, although the bypass 56 is provided inside the main body casing 12, the bypass 56 may also be provided outside the main body casing 12.

Each mode may be automatically switched by a controller. For example, the air circulation power can be increased periodically, such as every 10 minutes, or switches between the air circulation mode and the air clean mode in accordance with output signals from various sensors. For example, the air circulation may be performed when the temperature difference between the upper area and the lower area is high, or by detecting the amount of particles in the air, and the air cleaning power can be increased when the detected amount of particles in the air is high.

While omitted from the drawings, DC motors are applied as the motors 24, 32 which drive the filter fan 20 and the exhaust fan 28. The DC motors are driven by receiving DC power obtained by converting general utility power of 100VAC to DC. It should be noted that AC motors may be used as the motors 24, 32 such that AC power is supplied without conversion. Further, it is preferable to provide a controller including a microcomputer to perform drive control of the motors.

Further, although a single filter fan 20 and a single exhaust fan 28 are provided in the above embodiments, it is also possible to use two or more of either one or both of the filter fan 20 and the exhaust fan 28. In this way, the amount of air blown can be more freely determined.

### <Advantages of the Embodiments>

According to embodiments of the present invention, the advantages shown below can be achieved.
(i) Not only cleaned air passing through a filter, but also external air can be taken and blown. In this way, the amount of air blow can be increased, and thereby air inside a room can be circulated. Further, by performing the air circulation, all of the air in the room can be cleaned.
(ii) By providing two fans and independently controlling these fans, operations in various modes become possible.
(iii) By providing a shutter, modes can be reliably switched and air cleaning capacity can also be switched.

### [REFERENCE NUMERALS]

10 air-cleaning device, 12 main body casing, 12a opening portions, 14 base, 16 lid, 18 filter, 18a filter portion, 18b lower flange, 18c upper flange, 20 filter fan, 20a, 28a, 40 blades, 22, 30 stay, 24 motor, 26 vents, 28 exhaust fan, 32 motor, 42 upper disk, 44 ring, 50 shutter, 52 stay, and 56 bypass.

## Claims

1. An air-cleaning device (10) comprising:
a main body casing (12) including
an inlet provided on one side;
a discharge port provided on the other side; and
an air passage formed inside the main body casing (12);
a filter (18) provided inside the main body casing (12) and partitioning the air passage into an upstream side and a downstream side of the filter (18);
an exhaust fan (28) provided on the downstream side of the filter (18) in the air passage and discharging air on the downstream side of the filter (18) in the air passage through the discharge port;
a communication means communicating between outside the device (10) and the air passage between the exhaust fan (28) and the filter (18),
wherein, via the communication means, air communication is possible between the air passage on the downstream side of the filter (18) and outside the device (10);
**characterized by** a filter fan (20) provided on the down stream side of the filter (18) in the air passage and on the filter side of a cmmunication point of the communication means, and used to take in air having passed through the filter (18).

2. The air-cleaning device (10) according to claim 1, wherein the filter fan (20) is a centrifuge type fan and the exhaust fan (28) is an axial flow type fan.

3. The air-cleaning device (10) according to claim 1, wherein the air-cleaning device (10) further comprises a drive controller that controls driving of the filter fan (20) and the exhaust fan (28) independently.

4. The air-cleaning device (10) according to claim 3, wherein the filter fan (20) is a centrifuge type fan and the exhaust fan (28) is an axial flow type fan.

5. The air-cleaning device (10) according to any one of claims 1, and 2 to 4, wherein the communication means is provided with the main body casing (12) and serves as a vent for communicating between the air passage and outside the device (10).

6. The air-cleaning device (10) according to claim 5, wherein the vent is openable and closable.

## Patentansprüche

1. Luftreinigungsvorrichtung (10), umfassend:
ein Hauptkörpergehäuse (12), umfassend
einen Einlass, der auf einer Seite bereitgestellt ist;
einen Entladeanschluss, der auf der anderen Seite bereitgestellt ist;
einen Luftdurchgang, der im Inneren des Hauptkörpergehäuses (12) gebildet ist;
einen Filter (18), der im Inneren des Hauptkörpergehäuses (12) bereitgestellt ist und den Luftdurchgang in eine vorgelagerte Seite und eine nachgelagerte Seite des Filters (18) teilt;
ein Abluftgebläse (28), das auf der nachgelagerten Seite des Filters (18) im Luftdurchgang bereitgestellt ist und Luft auf der nachgelagerten Seite des Filters (18) im Luftdurchgang durch den Entladeanschluss entlädt;
ein Kommunikationsmittel, das zwischen dem Äußeren der Vorrichtung (10) und dem Luftdurchgang zwischen dem Abluftgebläse (28) und dem Filter (18) kommuniziert,
wobei über das Kommunikationsmittel eine Luftkommunikation zwischen dem Luftdurchgang auf der nachgelagerten Seite des Filters (18) und dem Äußeren der Vorrichtung (10) möglich ist;
**gekennzeichnet durch** ein Filtergebläse (20), das auf der nachgelagerten Seite des Filters (18) im Luftdurchgang und auf der Filterseite eines Kommunikationspunkts des Kommunikationsmittels bereitgestellt ist und verwendet wird, um Luft aufzunehmen, die **durch** den Filter (18) passiert ist.

2. Luftreinigungsvorrichtung (10) nach Anspruch 1, wobei das Filtergebläse (20) ein Gebläse vom Typ Zentrifuge ist und das Abluftgebläse (28) ein Gebläse vom Typ axialer Fluss ist.

3. Luftreinigungsvorrichtung (10) nach Anspruch 1, wobei die Luftreinigungsvorrichtung (10) weiter eine Antriebssteuerung umfasst, die den Antrieb des Filtergebläses (20) und des Abluftgebläses (28) unabhängig voneinander steuert.

4. Luftreinigungsvorrichtung (10) nach Anspruch 3, wobei das Filtergebläse (20) ein Gebläse vom Typ Zentrifuge ist und das Abluftgebläse (28) ein Gebläse vom Typ axialer Fluss ist.

5. Luftreinigungsvorrichtung (10) nach einem der Ansprüche 1 und 2 bis 4, wobei das Kommunikationsmittel mit dem Hauptkörpergehäuse (12) bereitgestellt ist und als eine Belüftung zur Kommunikation zwischen dem Luftdurchgang und dem Äußeren der Vorrichtung (10) dient.

6. Luftreinigungsvorrichtung (10) nach Anspruch 5, wobei die Belüftung geöffnet und geschlossen werden kann.

## Revendications

1. Dispositif d'épuration d'air (10) comprenant :
un carter de corps principal (12) comportant
une entrée prévue sur un côté ;
un orifice d'évacuation prévu sur l'autre côté ; et
un passage d'air formé à l'intérieur du carter de corps principal (12) ;
un filtre (18) prévu à l'intérieur du carter de corps principal (12) et divisant le passage d'air en un côté amont et un côté aval du filtre (18) ;
un ventilateur aspirant (28) prévu sur le côté aval du filtre (18) dans le passage d'air et évacuant l'air sur le côté aval du filtre (18) dans le passage d'air à travers l'orifice d'évacuation ;
un moyen de communication établissant une communication entre l'extérieur du dispositif (10) et le passage d'air entre le ventilateur aspirant (28) et le filtre (18),
dans lequel, une communication d'air, par l'intermédiaire du moyen de communication, est possible entre le passage d'air sur le côté aval du filtre (18) et l'extérieur du dispositif (10) ;
**caractérisé par** un ventilateur filtrant (20) prévu sur le côté aval du filtre (18) dans le passage d'air et sur le côté de filtre d'un point de communication du moyen de communication, et utilisé pour aspirer de l'air ayant traversé le filtre (18).

2. Dispositif d'épuration d'air (10) selon la revendication 1, dans lequel le ventilateur filtrant (20) est un ventilateur de type centrifuge et le ventilateur aspirant (28) est un ventilateur de type à flux axial.

3. Dispositif d'épuration d'air (10) selon la revendication 1, dans lequel le dispositif d'épuration d'air (10) comprend en outre un dispositif de commande d'entraînement qui commande l'entraînement du ventilateur filtrant (20) et du ventilateur aspirant (28) de manière indépendante.

4. Dispositif d'épuration d'air (10) selon la revendication 3, dans lequel le ventilateur filtrant (20) est un ventilateur de type centrifuge et le ventilateur aspirant (28) est un ventilateur de type à flux axial.

5. Dispositif d'épuration d'air (10) selon l'une quelconque des revendications 1 et 2 à 4, dans lequel le moyen de communication est doté du carter de corps principal (12) et sert d'évent pour la communication entre le passage d'air et l'extérieur du dispositif (10).

6. Dispositif d'épuration d'air (10) selon la revendication 5, dans lequel l'évent peut être ouvert et fermé.
